# EUROPEAN PATENT APPLICATION

(11) **EP 3 536 477 A1**
(43) Date of publication of application: **11.09.2019**
(21) Application number: 17867936.1
(22) Date of filing: 17.10.2017
(51) Int. Cl.: B29C 45/00, B29L 9/00

(54) **METHOD FOR PRODUCING METAL-IMITATING RESIN MOLDED MEMBER, METAL-IMITATING RESIN MOLDED MEMBER AND USE OF METAL-IMITATING RESIN MOLDED MEMBER**

(30) Priority: 04.11.2016 JP 2016215817
(71) Applicant: Sanpura Co., Ltd., Hamamatsu-shi, Shizuoka 433-8118 (JP)
(72) Inventor: MUKAIYAMA, Kenichi, Hamamatsu-shi Shizuoka 433-8118 (JP)
(74) Representative: v. Bezold & Partner Patentanwälte - PartG mbB
(86) International application number: PCT/JP2017/037511
(87) International publication number: WO 2018/083972

(57) **Abstract**

A method for producing a metal-imitating resin molded member is characterized by including molding a high specific gravity resin material that includes tungsten and a resin, and surface-plating a surface of the molded high specific gravity resin material; the high specific gravity resin material is molded by injection molding; the weight ratio of tungsten is 70% to 95%, the weight ratio of the resin 30% to 5%, and the specific gravity of the high specific gravity resin material is 6 to 13; the resin is nylon resin or polyphenylene sulfide; and at least one additive selected from the group including zinc oxide, silica, talc, silicon, glass fibers, carbon fibers, aramid fibers, and cellulose nanofibers is mixed into the high specific gravity resin material.

## Description

### Technical Field

The present disclosure relates to a method for producing a metal-imitating resin molded member useable as a substitute for a metal member, the metal-imitating resin molded member, and a method for using the metal-imitating resin molded member.

### Background Art

From the standpoints of having prescribed strength, resistance to disinfection, resistance to reagents, and as may be required, a prescribed weight (specific gravity), a scalpel that is a medical instrument, a pair of scissors that is a barbering instrument, and the like are conventionally members that are made only from metal. For example, metallic materials are used for the pair of scissors and scalpel of Patent Literature 1.

### Citation List

### Patent Literature

Patent Literature 1: International Publication No. WO99/24628

### Summary of Invention

### Technical Problem

Thus when the conventional metal molded member requires a complex shape and smoothly curving surfaces, such as those of the scalpel that is a medical instrument and the pair of scissors that is a barbering instrument, the conventional metal molded member suffers complexity of manufacturing, poor high-volume manufacturability of identical units, and difficulty in suppressing manufacturing costs.

In consideration of such circumstances, an object of the present disclosure is to provide a method for producing a metal-imitating resin molded member, the metal-imitating resin molded member, and a method for using metal-imitating resin molded member, the molded member having a texture and mass similar to those of a metal and excellent high-volume manufacturability, and the method for producing the molded member being capable of suppressing manufacturing costs.

### Solution to Problem

In order to attain the aforementioned objective, a method for producing a metal-imitating resin molded member according to a first aspect of the present disclosure includes: molding a high specific gravity resin material that includes tungsten and a resin; and surface-plating a surface of the molded high specific gravity resin material.

In a method for producing the metal-imitating resin molded member according to a second aspect of the present disclosure, the high specific gravity resin material is molded by injection molding.

In a method for producing the metal-imitating resin molded member according to a third aspect of the present disclosure, the surface-plating is performed after polishing of the surface of the molded high specific gravity resin material.

In a method for producing the metal-imitating resin molded member according to a fourth aspect of the present disclosure, a weight ratio of tungsten is 70% to 95%, a weight ratio of the resin is 30% to 5%, and a specific gravity of the high specific gravity resin material is 6 to 13.

In a method for producing the metal-imitating resin molded member according to a fifth aspect of the present disclosure, the resin is nylon resin or polyphenylene sulfide resin.

A method for producing the metal-imitating resin molded member according to a sixth aspect of the present disclosure further includes mixing at least one additive selected from among a group including zinc oxide, silica, talc, and silicon, in the high specific gravity resin material.

A method for producing the metal-imitating resin molded member according to a seventh aspect of the present disclosure further includes mixing at least one additive selected from among a group including glass fibers, carbon fibers, aramid fibers, and cellulose nanofibers, in the high specific gravity resin material.

In a method for producing the metal-imitating resin molded member according to an eighth aspect of the present disclosure, the plating is chromium plating.

A metal-imitating resin molded member according to a ninth aspect of the present disclosure is produced by the method of any one of the first aspect to eighth aspect.

A method for using a metal-imitating resin molded member according to a tenth aspect of the present disclosure uses the metal-imitating resin molded member produced by the method of any one of the first aspect to eighth aspect as a barbering instrument.

A method for using a metal-imitating resin molded member according to an eleventh aspect of the present disclosure uses the metal-imitating resin molded member produced by the method of any one of the first aspect to the eighth aspect as a medical instrument.

A method for using a metal-imitating resin molded member according to a twelfth aspect of the present disclosure uses the metal-imitating resin molded member produced by the method of any one of the first aspect to the eighth aspect as a cosmetic instrument.

### Advantageous Effects of Invention

According to the present disclosure, the high specific gravity resin material is molded that that includes tungsten and a resin, and the molded high specific gravity resin material is surface-plated, thereby enabling the high specific gravity resin material to have a texture and mass similar to those of a metal and to have excellent high-volume manufacturability, and enabling suppression of manufacturing costs.

### Description of Embodiments

Embodiments of the present disclosure are described below in detail. In the present disclosure, a "metal-imitating resin molded member" is a resin member that is useable as a substitute for a metal member, and is a resin substitute for a member that is conventionally made of metal. In the present disclosure, the "metal-imitating resin molded member" is a resin-molded member that is produced by molding the high specific gravity resin material to basically make all of a basic structural framework of the member and to imitate a metal member such that the metal-imitating resin molded member appears to be entirely formed from metal.

The basic procedure of the method for producing the metal-imitating resin molded member of the present disclosure includes: molding into a prescribed shape a high specific gravity resin material that includes tungsten and a resin, and surface-plating a surface of the molded high specific gravity resin material. The shape into which the high specific gravity resin material is molded, that is, the shape of the metal-imitating resin molded member, is freely selected; and the shape is not limited by the final application of the metal-imitating resin molded member. Specific examples of applications of the metal-imitating resin molded member of the present disclosure are described below.

Although no particular limitation is placed on the method of molding the high specific gravity resin material, molding the high specific gravity resin material by injection molding is particularly preferred. Manufacturing costs are easily suppressed by the use of injection molding.

The surface-plating is performed with advantage after polishing of the molded high specific gravity resin material in order to further smooth the surface of the molded high specific gravity resin material by eliminating irregularities that occur during molding of the surface of the molded high specific gravity resin material. Although no particular limitation is placed on the polishing method, the polishing method may be buffer polishing or the like.

Although the fraction of tungsten in the high specific gravity resin material is determined in accordance with a target specific gravity of the metal-imitating resin molded member, that is, the high specific gravity material, considering that the metal-imitating resin molded member imitates a metal member with respect to weight, the weight ratio of the tungsten is preferably 70% to 95%, the weight ratio of the resin is preferably 30% to 5%, and the specific gravity of the high specific gravity resin material is preferably 6 to 13. Although no particular limitation is placed on the resin material as long as the resin material can be used with tungsten, upon consideration of factors such as molding ability, the resin material is preferably nylon resin or polyphenylene sulfide resin.

Strength, weathering resistance, and the like material qualities can be improved by mixing into the high specific gravity resin material at least one additive selected from the group including zinc oxide, silica, talc, and silicon. Further, strength, weathering resistance, and the like can be improved by intermixing of at least one additive selected from the group including glass fibers, carbon fibers, aramid fibers, and cellulose nanofibers, with or without the zinc oxide, silica, talc, and silicon.

Although no limitation is placed on the type of plating method for the plating, such plating may be chromium plating.

Although no particular limitation is placed on the use (method of application) of the metal-imitating resin molded member molded by such a production method, possible uses include use in a barbering instrument such as a handle part of a barbering pair of scissors, use in a medical instrument such as a medical scalpel or a medical clamp, and the like. For example, in the case of use in a pair of barbering scissors, the blade parts may be formed of metal, and the entire handle parts may be formed from the metal-imitating resin molded member. Further, although no particular limitation is placed on the use (method of application) of the metal-imitating resin molded member formed by this production method, the metal-imitating resin molded member may be used as part of a cosmetic instrument such as a cosmetic roller for performing facial massage.

According to the method for producing the metal-imitating resin molded member, the metal-imitating resin molded member, and the method for using the metal-imitating resin molded member of the present disclosure as described above, the metal-imitating resin molded member has a texture and mass similar to those of a metal, high-volume manufacturability is excellent, and manufacturing costs can be suppressed.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

This application claims the benefit of Japanese Patent Application No. 2016-215817, filed on November 4, 2016, the entire disclosure of which is incorporated by reference herein.

### Industrial Applicability

As described above, the present disclosure can be used to provide a method for producing the metal-imitating resin molded member, the metal-imitating resin molded member, and the method for using the metal-imitating resin molded member of the present disclosure, the metal-imitating resin molded member has a texture and mass similar to that of a metal, high-volume manufacturability is excellent, and manufacturing costs can be suppressed.

## Claims

1. A method for producing a metal-imitating resin molded member useable as a substitute for a metal member, **characterized by** comprising:
molding a high specific gravity resin material that includes tungsten and a resin; and
surface-plating a surface of the molded high specific gravity resin material.

2. The method for producing the metal-imitating resin molded member according to claim 1, wherein the high specific gravity resin material is molded by injection molding.

3. The method for producing the metal-imitating resin molded member according to any one of claims 1 and 2, wherein the surface-plating is performed after polishing of the surface of the molded high specific gravity resin material.

4. The method for producing the metal-imitating resin molded member according to any one of claims 1 to 3, wherein:
a weight ratio of tungsten is 70% to 95%,
a weight ratio of the resin is 30% to 5%, and
a specific gravity of the high specific gravity resin material is 6 to 13.

5. The method for producing the metal-imitating resin molded member according to any one of claims 1 to 4, wherein the resin is nylon resin or polyphenylene sulfide resin.

6. The method for producing the metal-imitating resin molded member according to any one of claims 1 to 5, **characterized by** further comprising:
mixing at least one additive selected from among a group consisting of zinc oxide, silica, talc, and silicon, in the high specific gravity resin material.

7. The method for producing the metal-imitating resin molded member according to any one of claims 1 to 6, **characterized by** further comprising:
mixing at least one additive selected from among a group consisting of glass fibers, carbon fibers, aramid fibers, and cellulose nanofibers, in the high specific gravity resin material.

8. The method for producing the metal-imitating resin molded member according to any one of claims 1 to 7, wherein the plating is chromium plating.

9. A metal-imitating resin molded member, **characterized in that** the metal-imitating resin molded member is produced by the method according to any one of claims 1 to 8.

10. A method for using a metal-imitating resin molded member, **characterized in that** the metal-imitating resin molded member produced by the method according to any one of claims 1 to 8 is used as a barbering instrument.

11. A method for using a metal-imitating resin molded member, **characterized in that** the metal-imitating resin molded member produced by the method according to any one of claims 1 to 8 is used as a medical instrument.

12. A method for using a metal-imitating resin molded member, **characterized in that** the metal-imitating resin molded member produced by the method according to any one of claims 1 to 8 is used as a cosmetic instrument.
